# EUROPEAN PATENT SPECIFICATION

(11) **EP 2 551 519 B1**
(45) Date of publication and mention of the grant of the patent: **26.08.2015**
(21) Application number: 11175585.6
(22) Date of filing: 27.07.2011
(51) Int. Cl.: E04H 12/10, E04H 12/12, E04H 12/08, F03D 11/04, F03D 1/00

(54) **Optimisation of a wind turbine**
Optimierung einer Windturbine
Optimisation d'une éolienne

(43) Date of publication of application: 30.01.2013
(73) Proprietor: Siemens Aktiengesellschaft, 80333 München (DE)
(72) Inventor: Laurberg, Hans, 8000 Århus C (DK); Rasmussen, Anders Nygaard, 2200 Kobenhavn (DK)

(56) References cited:
- WO-A1-84/04117
- WO-A2-2009/080028
- DE-A1- 3 842 026
- DE-U1-202005 018 572

## Description

The present invention concerns a method of optimising a construction of a basis of a wind turbine comprising at least a tower and a foundation on which the tower rests, both the tower and the foundation comprising a carrying structure each. It also concerns a system for such purpose and such basis of a wind turbine.

Today's wind turbines comprise towers which are based on a construction outline that implies that at any horizontal cross section there can be found an essentially round shape, i.e. a circular shape. "Essentially round" means that the tower can be completely circular as would be the case for instance with cast concrete towers. It may, however, also be made up of plain elements which are aligned along the perimeter and orientated along a circle. In other words, in both cases a circle is the shape-giving geometric figure on which the horizontal cross-sectional shape is based. Such outline implies that the tower can withstand the same loads from any direction, i.e. from above or from any side of the wind turbine to the same extent.

Such construction implies that equally strong elements and/or an equally strong design all around the perimeter of the tower is realised. This strength is defined by a calculated or otherwise predicted maximum load. The higher this load, the greater the strength of the carrying structure. That also implies that the costs in effort, time, material and money for the construction are accordingly higher.

The German patent application DE 38 42 026 Al shows a tower construction of a wind turbine comprising elements arranged along circular cross-sections of the tower. Thereby, reinforcement structures are aligned symmetrically all along the inner side of the tower.

As for the foundation of the tower, which is a part of the basis, this may be an artificial foundation such as a concrete foundation or it might be a natural foundation such as a rock. Combinations thereof may also be realised; according to the state-of-the-art such foundations have been designed to be equally strong at any horizontal cross section because otherwise the distribution of loads in the tower would meet an unequal distribution of loads in the foundation. Therefore, the aim has always been to match the load distribution which the tower can resist and the load distribution which the foundation can resist. In essence, it can be concluded that it has always been the case that foundations provide for a structure which resists equal loads all over its horizontal cross section. Again, depending on the possible maximum loads, the construction of such foundation can be very costly with respect to effort, time, material and money.

It is the object of the invention to provide for an optimised construction of the basis of a wind turbine of the above-mentioned kind.

This object is met by a method according to claim 1, by a basis of a wind turbine according to claim 11 and by a system according to claim 12.

Thus, in accordance with the invention, the method of the above-mentioned kind comprises at least the following steps:
- analysing a local load environment situation of a construction location where the wind turbine is to be built and deriving from that analysis local load-relevant environment data,
- creating construction instructions for structuring the basis, whereby the construction instructions are based on the local load-relevant environment data and on a set of predefined rules for processing the local load-relevant environment data such that in a first selected region of the basis along a circumference of the tower and/or in a first selected region of the foundation the carrying structure of the basis is locally weakened, i.e. intentionally made weaker, in at least one selected horizontal cross-section with respect to possible maximum fatigue loads in comparison with a second region of the basis in the selected cross-section, whereby the predefined rules are such that the tower, is locally weakened by locally changing its material quality and/or a material quality of a constructional element;
- outputting the construction instructions for further processing.

The invention makes use of an analysis of the local environment situation and can for instance include parameter values concerning wind influences and others (see below). From this analysis there results so-called local load-relevant environment data. These environment data represent the local load environment situation in a preferably very detailed way. In particular, they preferably represent those features of the local load environment which have the largest influence on the predicted load distribution of the basis of the wind turbine. It is thus preferred that the load environment data include parameter values the influence of which amounts to at least 50% of the overall influences on the load distribution of the basis of the wind turbine, most preferred 70%.

Taking into consideration these local load environment data construction instructions are derived, i.e. created. Such construction instructions may be considered to be construction guidelines comprising as a set of parameters and/or orders serving to give all relevant information on the basis of which the wind turbine's basis can be built. Such construction instructions can be based on a predefined set of instructions of a standard type which can be used as a kind of template some or all parameter values of which can be altered in order to arrive at a construction outline as desired within the context of the invention. Further, use can be made of user inputs, for instance of certain preferences by an architect or a civil engineer. In addition, use is made of a set of predefined rules, which can for instance be stored in a memory, i.e. be derived from a database.

Based on these rules the basis of the wind turbine is designed dependent on the input listed above. Therefore, in essence, the predefined rules contain criteria which made possible a particular design of the basis: this design is such that in a first selected region of the basis along a circumference of the tower and/or in a first selected region of the foundation the carrying structure of the basis is designed weaker in at least one selected horizontal cross-section. Preferably, such weakening is planned for several selected horizontal cross-sections, more preferred more than 50% and most prferred all horizontal cross-sections. In particular, it is advantageous if that ruling applies to at least 50%, preferably all of the horizontal cross-sections in the lower half of the tower.

In other words, some regions of the basis are decidedly weakened than others or - vice versa - some regions are made stronger than others. Throughout this description reference is always made to as weakening rather than strengthening of regions as the effect wished for in the context of the invention is that material and effort be safed rather than increased. Therefore, in comparison with the state-of-the-art wind turbine bases some regions are weaker rather than stronger than before. The result is construction instructions which are realised such that a non-uniform basis - the foundation and/or the tower - will be built if the construction instructions are realised. To conclude, the general idea of the invention is based on adapting the strength of the tower, i.e. its ability to resist loads, depending on a direction of loads - the basis can thus handle more loads from selected directions than from other selected directions.

Concerning the maximum loads which are taken into account, these loads may come from directly above and/or from any of the sides of the basis. In essence, these loads will all finally be directed into the foundation and normally be transferred by the tower or parts thereof. They may be induced by winds, waves (in offshore conditions) or other factors. For instance, if a wind turbine is built in a region with hills the surface of the ground may rise to one side while fall to the other side (i.e. be inclined). Therefore, it can be expected that forces or loads directed into the basis at one side at which the surface falls may be considerably higher than such forces or loads directed into it at the opposite side, whereby it needs to be stressed that this is a generalsation which does not generally apply. For instance, such load distribution may be different due to wind conditions.

According to the invention, the predefined rules are such that the tower is locally weakened by locally changing its material quality (i.e. especially the material quality of its covering or parts thereof) and/or a material quality of a constructional element of it. The term "material quality" in particular refers to the strength of the material, i.e. the loads which it can resist. For instance, different materials can be chosen for locally weakening the tower and the same principal material but with a quality at a lower level. The tower is thus "tailor-made" in the sense that only the necessary material is used in a particular region, this necessity being defined by the (expected, i.e. calculated or predicted) overall load distribution. This third method offers the advantage of being an easy realisable measure by which nevertheless enormous savings can be realised.

Generally, it is necessary that the wind turbine basis resists any kind of expected (maximum) loads. This in particular includes extreme loads and fatigue loads. Extreme loads may occur for instance of the wind turbine's operation completely fails, for example on a nacelle level of the wind turbine. Such failure may lead to forces and loads in virtually any direction and can be considered to be a kind of worst case. Fatigue loading in contrast is caused by forces (and loads) which constantly or often inflict loads onto the wind turbine's basis, such as forces by wind and by waves. Futhermore, the turbine's own dynamics are also a cause for wear and fatigue. This can be reduced to a minimum by making sure that these dynamics have a different frequency to the eigenfrequency of the tower. This way resonance effects can be avoided.

According to the invention the basis is locally weakened with respect to possible maximum fatigue loads. As extreme loads can generally be expected from any direction, it may be the case that as a general rule a weakening with respect to extreme loads is not wished for. Such extreme loads may be caused by storms or heavy waves, earthquakes or the like. However, the fatigue load distribution over the wind turbine can usually be calculated beforehand and therefore a wind turbine be designed according to that particular distribution.

This has the effect that it need not be expected that even under severe and extreme conditions the carrying structure of the basis is weaker than any other carrying structure of a basis of a wind turbine according to the state-of-the-art. In other words: one makes only use of the factor fatigue which can be predicted even over longer periods of time such as the typical lifetime span of a wind turbine basis.

When the construction instructions are generated they are output for further processing, for instance by printing out plans and/or by feeding a construction programme with the parameter values and/or orders comprised by the construction instructions.

It must be noted that in the context of the invention throughout the description, one in fact rather negligible factor is completely taken out of account: the "carrying structure" of the basis is defined such that doors, windows or any other openings not decidedly serving to weaken the carrying structure, will not be taken into account. Rather, the carrying structure is modelled as if it contained no such openings at all. In general, one can state that the carrying structure in these regions of openings of the tower is normally strengthened by frames or the like so that anyway one cannot speak of a weakening in their context but rather of a strengthening of the carrying structure.

One effect of the method according to the invention is that material, effort and, lastly, costs can be saved by for instance reducing material and/or weakening parts and/or material in other ways in some region of the basis of the wind turbine. In a way one can speak of a tailor-made basis which takes into account the distribution of expected loads depending on their direction of influence on the basis while at the same time also still considering possible peak (or maximum) loads from other directions. It can thus be expected that the basis of a wind turbine produced based on the construction instructions generated by means of a method according to the invention can be expected to produce about 20 to 30% less effort (material, construction time and expenses) in comparison with a state-of-the art basis.

According to the invention, a system of the above-mentioned kind for optimising a construction of a basis of a wind turbine comprising at least a tower and a foundation on which the tower rests, both the tower and the foundation comprising a carrying structure each, comprises at least:
- an input interface for data representing a local load environment situation of a construction location where the wind turbine is to be built,
- an analysation unit realised to analyse the local load environment situation and to derive from that analysis local load-relevant environment data,
- a rule database supplying in operation a set of predefined rules for processing the local load-relevant environment data, whereby the predefined rules are such that the tower is locally weakened by locally changing its material quality and/or a material quality of a constructional element;
- an instruction unit which in operation creates construction instructions for structuring the basis, the construction instructions being based on the local load-relevant environment data and on the set of predefined rules, such that in a first selected region of the basis along a circumference of the tower and/or in a first selected region of the foundation the carrying structure of the basis is locally weakened in at least one selected horizontal cross-section with respect to possible maximum fatigue loads in comparison with a second region of the basis in the selected cross-section,
- an output unit for outputting the construction instructions for further processing.

The system may be one integral unit comprising all the elements describe above, but the term "system" also implies that any of these elements can be assembled in different locations, for instance be realised as computer-based units operated on different processors interconnected by a computer network such as a local area network and or the internet. The system thus may comprise a housing in which one, several or indeed any of the elements described above are included or may just be comprised of several programmes run on one or several processors of computer systems. It can thus be concluded that the system and indeed any of its units can be based on hardware and/or on software, but also on a combination thereof.

For this reason the invention also concerns a computer programme product directly loadable into the memory of a programmable device comprising software code portions for performing the steps of a method according to the invention.

The result of the method according to the invention can eventually be the construction of a basis of a wind turbine. Therefore, the invention also concerns such basis of a wind turbine of the above-mentioned kind comprising at least a tower and a foundation on which the tower rests, both the tower and the foundation comprising a carrying structure each. Thereby, in a first selected region of the basis along a circumference of the tower and/or in a first selected region of the foundation the carrying structure of the basis is locally weaker in at least one selected horizontal cross-section with respect to possible maximum fatigue loads in comparison with a second region of the basis in the selected cross-section. In effect, the invention thus also concerns a wind turbine comprising a basis according to the invention.

Particularly advantageous embodiments and features of the invention are given by the dependent claims, as revealed in the following description. Thereby, features revealed in the context of the method may also be realised in the context of any of the claimed products and vice versa.

Principally the method according to the invention can stand alone on its own, for instance as performed by planners such as architects and/or civil engineers. For instance, using the method according to the invention may lead to an outline of a wind turbine's basis based on which outline a planner may decide that he does not want to realise the construction project despite the savings realisable due to the invention. This may for example be the case if the method according to the invention is applied in such circumstances in which the construction of a state-of-the-art wind turbine would be too costly and/or involve too much effort anyway. Therefore, the method according to the invention may be applied in order to find out whether or not by using this method a construction can be realised which is still feasible under the given circumstances. This may lead to a positive result because of the saving effects of the method according to the invention, but it may also lead to another negative result so that the wind turbine is not going to be built. In this sense, the method according to the invention provides a chance - combined with a calculation basis - for possibly constructing wind turbines in locations in which it otherwise would not be feasible.

Still, it is most preferred that the wind turbine is built, i.e. constructed, according to the construction instructions, i.e. the basis of the wind turbine is built based on the construction instructions. This means that the construction instructions are not mere planning parameters and/or orders but that they are realised by applying them in practise.

In order to make sure that the load resistence of the basis is well-balanced and distributed all along the perimeter of the basis, it may be advantageous to have more than just two regions with different resistance values for loads. It is thus preferred that the construction instructions are such that in a first selected region of the basis along a circumference of the tower and/or in a first selected region of the foundation the carrying structure of the basis is weakened in at least one selected horizontal cross-section with respect to possible maximum loads in comparison with a second region of the basis in the selected cross-section and that in the same horizontal cross-section there is a third selected region with yet another different strength with respect to possible maximum loads than the first and the second region.

Generally, the basis can only be weakened in one first region and left as strong as usual in any other regions. It is however preferred that in any horizontal cross-section the basis is symmetrically built, e.g. axially symmetric and/or symmetric with respect to a point, in particular the wind turbine tower. In this context it is most preferred that the tower and/or the foundation is designed as a radial symmetric arrangement, i.e. an arrangement in which several cutting planes perpendicular to a horizontal cross-section produce roughly identical pieces. This can enhance the overall stability of the basis, in particular of the tower.

One such embodiment with a (radial) symmetrical arrangement which is particularly preferred is realised by a method in which the predefined rules are such that the basis is weakened in at least two first regions which are positioned opposite of one another along the circumference of the tower in the selected horizontal cross-section. Such arrangement is particularly useful in such cases in which wind and/or waves from one particular direction are the main cause for loads, in particular fatigue loads. For instance in many parts of Western Europe there is typically a westerly wind. Therefore, the fatigue of the basis caused by the wind is mainly in those parts of the basis of a wind turbine which face either westwards or eastwards. Thus, weakening the wind turbine in the northerly and southerly direction at the same time does not constitute any particular additional weakening of the overall basis of the wind turbine with respect to fatigue loads.

As already mentioned before, the load-relevant environment data can represent various factors. According to a preferred embodiment the local load-relevant environment data considered are selected from at least one of the following:
- wind data about prevailing winds, i.e. wind directions and/or their strength, in the construction location,
- surface data about a ground surface in the construction location,
- wave behaviour data about expected directions and/or strengths of waves in an offshore application in the construction location.

Thereby, the predefined rules are such that the first region is chosen in dependence of the local load-relevant environment data.

As for the wind data, these can be for instance derived from a database in which statistical data about wind directions, possibly combined with values of wind strengths, are supplied. Such data can be generated for virtually every spot of the Earth without any particular difficulty. Another possibility, which can be used additionally or alternatively, is that the wind data are derived from data acquired by other wind turbines in close proximity to the wind turbine in question. If a wind park already exists and there is only yet another wind turbine or several additional wind turbines to be installed in this wind park or close by, the wind directions have been measured by the existing wind turbines of the wind park or by wind metres which operate in the context of this wind park, the data from which can also be used.

As mentioned before, the basis comprises the foundation and the tower. Whereas it is possible to locally weaken the foundation in one first selected region, it is preferred that the predefined rules are such that the tower is locally weakened in a first region. While it may be difficult and more costly to actually locally weaken the foundation, such weakening is particularly simple to plan and to realise physically when it comes to the tower. Such way the foundation may be designed according to an overall standard of load distribution on foundations whereas it is only the tower which is locally weakened in the first region.

If the tower is weakened, there are several possible methods of realisation of such weakening. Their choice depends on several factors, amongst others on the kind of material used for the tower. Such tower can for instance be realised as a (tubular) steel tower, as a shell tower, as a lattice tower, or as a concrete tower - or indeed as a combination of any one of those.

According to a first method of realisation the predefined rules are such that the tower comprises a set of a group, i.e. of one or several, of construction elements. Thereby at least a first group of construction elements is weaker than a second group of construction elements of the set. Such construction elements can for instance be shells and/or lattices and/or plates. A set of them comprises such construction elements which are positioned adjacent to one another. For instance, such construction elements can be essentially aligned along the circumference of a circle which defines the circumference of the tower in a particular horizontal cross-section.

In this context it is preferred that the first group of construction elements has a different size and/or shape and/or amount of construction elements than the second group of construction elements. For instance, there can be smaller construction elements in the first group or alternatively larger construction elements with respect to at least one extension of the construction elements. The shape of the construction elements belonging to the first group may constitute one plane while those construction elements belonging to the second group may be non-linear in one direction or alternatively the other way round. Depending on on the size of the construction elements of the first group the amount in a certain area with a predefined extension, i.e. dimension, may also vary.

The second realisation method for weakening the tower locally, which can be used additionally or alternatively to the first method of realisation, is that the predefined rules are such that the tower is locally weakened by locally decreasing its thickness and/or a thickness of a construction element of it. In particular, the thickness of the construction elements and/or of the tower refers to a covering structure which establishes an outer surface of the tower. Such local weakening by simply making regions thinner than others is particularly easy to plan and to produce. It also has the advantage that even once the wind turbine has been realised and is completely constructed such weakening by varying the material strength or thickness can easily be detected even by non-experts. This way it will be clear at any time - even in the aftermath of the establishment of the wind turbine - that this particular wind turbine has been constructed according to the invention. Such fact may be considered when it comes to particular maintenance works or add-ons to the tower, for instance when holes are drilled somewhere into the surface of the tower.

The third method of realisation, again applicable alternatively or additionally to any of the previously mentioned ones, is that the predefined rules are such that the tower is locally weakened by locally changing its directional stiffness. This can for instance be realised by using different supports within the tower, in particular such supports which follow an essentially vertical overall extension of the tower. For example, more or less metal wires or columns can be established along the perimeter of the general outline of the wind turbine's tower which can constitute the support for outer shell elements of the tower. Such wires can also be used when the tower is made of steel-reinforced concrete so that less steel wires are introduced into the concrete in the first region as defined above in comparison with the second region.

According to a fourth method of realisation, again to be used additionally or alternatively with any of the others, the predefined rules are such that diameters along a circumference of the tower in at least one of its horizontal cross sections differ. This implies that instead of a purely circular outline of the tower in the horizontal cross sections, the tower either has a shape which includes corners or - which is most preferred due to reasons of stability - it has an essentially non-circular shape such as an oval shape. A change of shape, i.e. form, i.e. geometry can also be applied in the context of the foundation.

It may however be noted, that cross-sectional shapes which in essence constitute a circular shape are explicitly excluded from this method as they would fall under the definition of a "circular shape". Such nearly circular shapes can be realised by arranging, i.e. fixing construction elements around a circular shape in such way that they are aligned adjacent to one another. In such case the outside shape of the tower need not necessarily be exactly circular, but it is still based on a circle in the sense that it is arranged around a circular structure.

Preferably, and in particular with respect to what has been said just before, the predefined rules are such that the centre of gravity of the tower is kept at the geometric centre of the tower. The centre of gravity can be derived by virtually going through all horizontal cross-sections and deriving their centre of gravity, then deriving from the centres of gravity a middle value. If this middle value falls together with the geometric centre of the tower, that secures that the tower in itself is particularly stable despite the weakening as wished for in the context of the invention.

If the foundation is to be weakened (additionally to the tower or only on its own), it is preferred that this is accomplished by leaving out reinforcement elements which would be necessary to achieve an equal load distribution overall in the foundation. Such reinforcement elements can also be used in such cases in which the foundation is not a purely artificial one, i.e. a combination of a natural and an artificial foundation, thus comprising both natural and artificial elements. In particular, such reinforcement elements within the artificial parts can be added or left out. Thus in those regions of the foundation which are to be weakened, leaving out some more all reinforcement elements would be an easy way of how to effectively and cost-savingly weaken the foundation in the first region. Such elements may for instance be metal elements comprised in a concrete foundation, the amount and/or the quality of which can be varied so that the amount and/or the quality are reduced in the first region while not (or not to such an extent) in the second region.

Other objects and features of the present invention will become apparent from the following detailed descriptions considered in conjunction with the accompanying drawings. It is to be understood, however, that the drawings are designed solely for the purposes of illustration and not as a definition of the limits of the invention.

In the drawings, like reference numbers refer to like objects throughout. Objects in the diagrams are not necessarily drawn to scale.
Fig. 1 shows a schematic block diagram of an embodiment of the method according to the invention,
Fig. 2 shows a top view of a tower according to the state-of-the-art,
Fig. 3 shows a side view of the same tower as depicted in Fig. 2,
Fig. 4 shows a diagram of wind distributions in a particular construction location,
Fig. 5 shows a schematic view of a horizontal cross-section of a basis of a wind turbine according to a first embodiment of the invention,
Fig. 6 shows a schematic view of a horizontal cross-section of a basis of a wind turbine according to a second embodiment of the invention,
Fig. 7 shows a schematic block diagram of a system according to an embodiment of the invention.

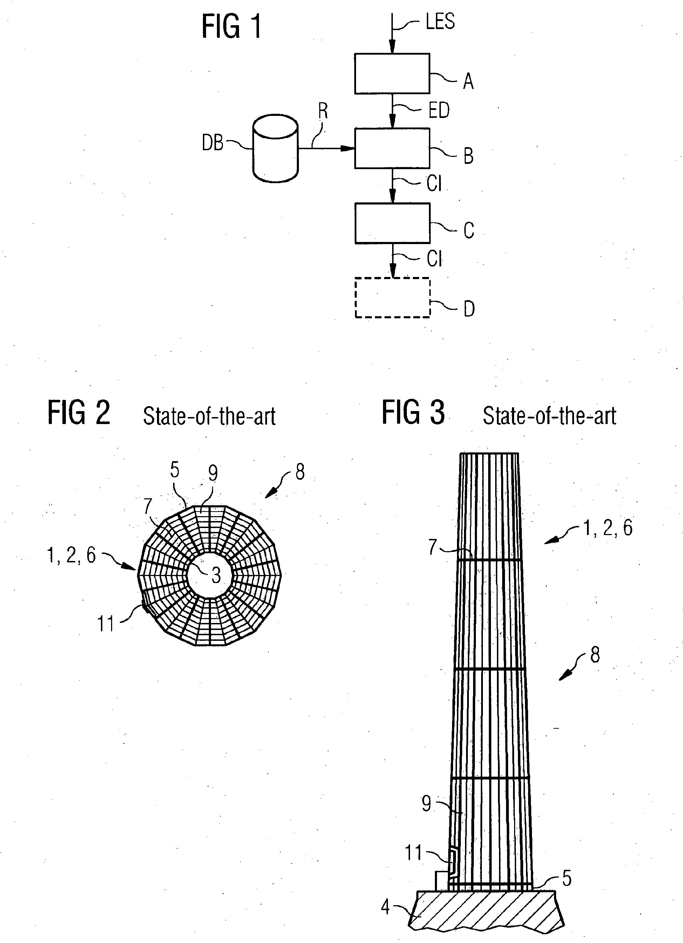

Figure 1 shows in a schematic block diagram the steps of an embodiment of the method according to the invention. In a first step A a local environment situation LES of a construction location, where a wind turbine is planned to be built is analysed. From that analysis there result local load-relevant environmental data ED representing the local environment situation LES. In particular, these local load-relevant environment data ED may comprise parameter values which represent wind conditions and/or other weather conditions. Furthermore, they may, if the wind turbine to be built in an offshore location, represent the influence of waves, in particular wave directions and typical maximum heights of waves in the construction location. In contrast, if the wind turbines is to be built in an onshore location, they may also represent surface conditions of the site on which the wind turbine is to be built. For instance, information whether the surface is evenly horizontal or essentially angular to the horizontal direction (i.e. inclined), may be included.

These local load-relevant environmental data ED are then (in a second step B) used for creating construction instructions CI. Thereby, use is made of a set of predefined rules R from a database DB , which rules R give indications of how to derive from the local load-relevant environment data ED the construction instructions CI. These construction instructions CI are such that a realisation of a basis of a wind turbine based on them results in the following: in a first selected region of the basis of a wind turbine along a circumference of the wind turbine's tower and/or in a first selected region of the tower's foundation the carrying structure of the basis is weakened in at least one selected horizontal cross-section with respect to possible maximum loads in comparison with a second region of the basis in the selected cross-section.

In a third step C the construction instructions CI are output to a user and/or to further processing means such as a computer processor or the like.

In an optional step D the wind turbine, in particular the basis of the wind turbine, is built based on the construction instructions CI.

Figures 2 and 3 show a tower 6 of a wind turbine 8 according to the state-of-the-art. The tower 6 comprises a carrying structure 2. Together with a foundation 4 (cf. Figure 3) the tower 6 is part of up a basis 1 of the wind turbine 8. At its lower end facing towards the foundation 4 the tower 6 has a lower circumference 5 whereas on its top end facing towards a nacelle (not shown) it has a top circumference 3 the diameter of which is smaller than that of the lower circumference 5. Both the upper and lower circumferences 3, 5 have an essentially circular shape which is defined by the form of a number of shells 9 which each have a plane form and which are aligned adjacent to one another around a circular line which defines the circumferences in any horizontal cross-section of the tower 6. The tower 6 has several levels interconnected by interfaces 7 at which the shells 9 of different levels are aligned in the vertical direction. The tower 6 also comprises an opening 11 realised as a door 11. When referring to the carrying structure 2 of the tower 6 the door 11 and indeed any other similar openings (not shown) are neglected.

The tower 6 and the foundation 4, i.e. the complete basis 1 of the wind turbine 8 are completely constructed such that all around the tower 6 and in any cross-section of the foundation 4 equal loads can be resisted, i.e. compensated. This is due to construction parameters which take into account that loads from virtually any direction, in particular from side directions, have to be resisted so that in fact the maximum predicted load coming from any side of the wind turbine 8 is the basis of the calculation of the strengths of the basis overall. It may be noted that the maximum possible loads of the tower 6 and of the foundation 4 may still vary.

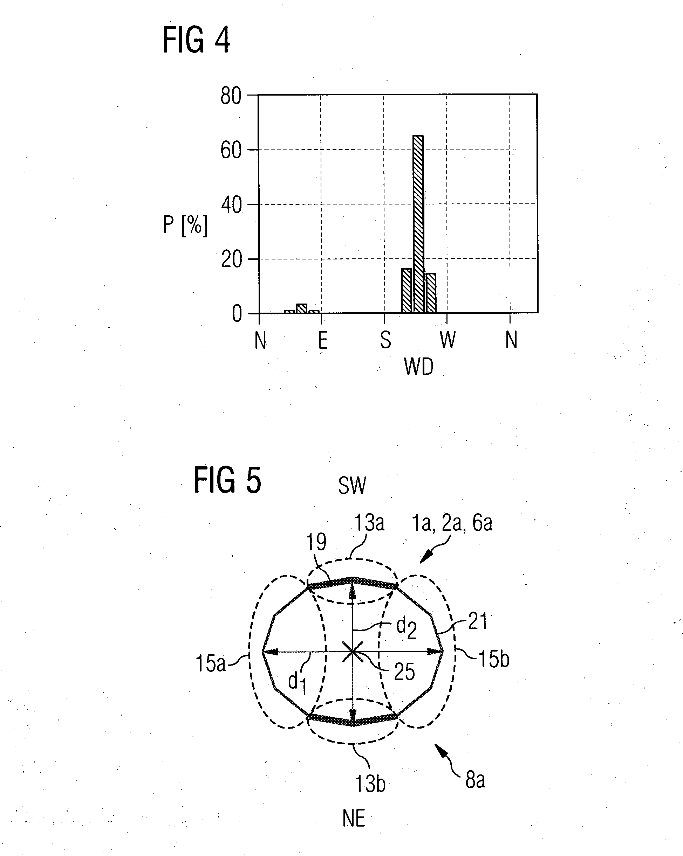

Figure 4 shows a schematic diagram of wind conditions at a selected construction location where a wind turbine 8 is situated. The probability P in % is depicted over the wind data WD of time of winds blowing from wind directions which winds have a power which provides for power outputs of the wind turbine 8 above a threshold value of 25% of its nominal power output. It can be seen that essentially the wind in this construction location comes from the south-westerly direction and very few times from the north-easterly direction. Therefore, it can be concluded that the main loads and in particular the main fatigue loads which the basis 1 of the wind turbine 8 has to compensate in such a construction location will come from those two mentioned principal directions. In contrast, virtually no winds are expected from the south-easterly and north-westerly directions.

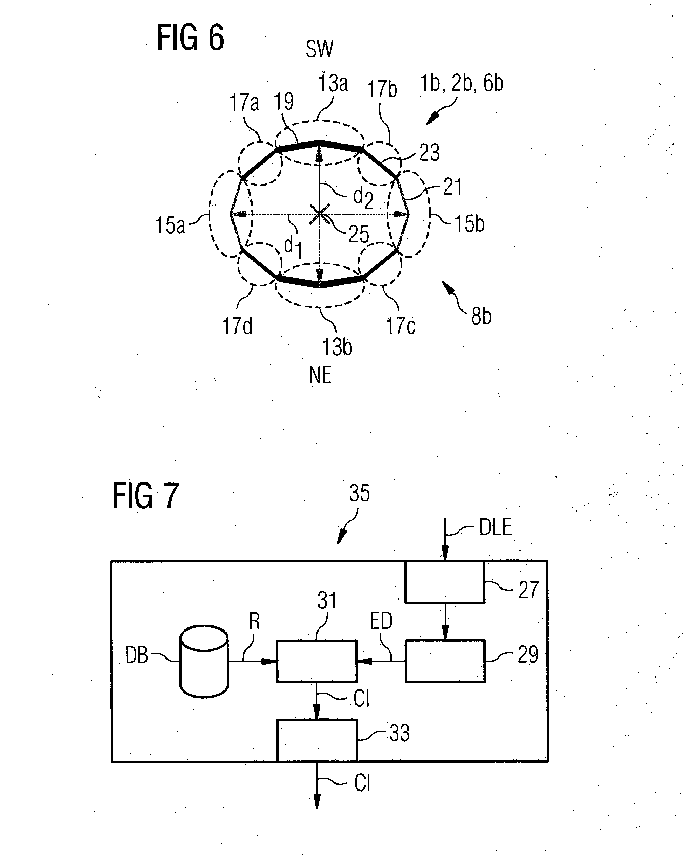

These wind data WD are now used as a basis of the optimisation of the construction of the basis of a wind turbine according to the invention as exemplarily shown oin Figures 5 and 6, for instance for the construction of a second wind turbine to be built in close proximity of the wind turbine 8. A close proximity which falls under the definition of the same construction location is within a range of 10 kms, preferably 5 kms, most preferred 1 km of the previously established wind turbine 8.

Figures 5 and 6 show two different embodiments of a basis according to the invention.

In Figure 5 a basis 1a of a wind turbine 8a is shown. It comprises a carrying structure 2a of a tower 6a in a horizontal cross-section anywhere along the vertical extension of the tower 6a. Along its circumference the tower 6a is made up of shells 19, 21. In two first regions 15a, 15b there are arranged shells 21 of a smaller strength, i.e. thickness, than in two second regions 13a, 13b, where the shells 19 are in contrast thicker than the firstly-mentioned shells 21. The two second regions 13a, 13b face in the south-westerly and in the north-easterly direction. As a result, the tower 6a and with it the basis 1a are weakened in the two first regions 15a, 15b in comparison with the second regions 13a, 13b in this particular horizontal cross-section. It is thereby preferred that all along the vertical extension of the tower 6a such a principle outline of stronger and wekaer regions is realised.

Furthermore, the tower 6a has a non-circular shape. This can be seen by looking at the two diameters d₁, d₂ depicted in Figure 5. In the same horizontal cross-section a first diameter d₁ connecting the two first regions 15a, 15b is larger than a second diameter d₂ connecting the two second regions 15a, 15b. This makes up for an essentially oval shape of the horizontal cross-section of the tower 6a. This way the tower 6a is also regionally weakened, respectively strengthened in other regions. In this particular case, the tower 6a is strengthened with respect to loads coming from the south-easterly and the north-westerly side. Therefore, the tower 6a has been weakened in these two directions by weakening the thickness of the respective shells 21 whereas at the same time it is strengthened by the increased first diameter d₁. This strengthening does not completely compensate the weakening due to the reduced thickness of the shells 21, but rather balances it to a certain limited extent.

Figure 6 shows the same features as discussed with reference to Figure 5, so that the reference numbers 1b, 2b, 6b and 8b refer to a basis 1a, a carrying structure 2a, a tower 6b and a wind turbine 8b. The feature differ in one respect, namely that the first regions 15a, 15b are reduced in their extent and that between the first regions 15a, 15b and the second regions 13a, 13b there are positioned third regions 17a, 17b, 17c, 17d in which the thickness of shells 23 is in between the thickness of the shells 21 positioned in the first regions 15a, 15b and the shells 19 positioned in the second regions 13a, 13b. Therefore, a kind of transfer area is realised by the shells 23 in the third regions 17a, 17b, 17c, 17d so that the load resistance is not abruptly reduced as was the case in the embodiment shown in Figure 5.

Figure 7 shows a schematic block view of a system 35 according to an embodiment of the invention. It comprises an input interface 27 via which data DLE which represent a local environment situation LES can be received.

These data DLE are transferred into an analysation unit 29 which analyses the local load environment situation LES and therefrom derives local load-relevant environment data ED. These local load-relevant environment data ED are then used in order to generate construction orders CI. This is carried out based on rules R from a rule database DB in the sense as described in the context of Figure 1. These construction orders CI are then output via an output unit 33 realised as an output interface 33. They can then for instance be sent to a printing device and/or to a display device so that construction staff can evaluate the construction instructions CI and possibly construct a basis of a wind turbine based on the construction orders CI.

Although the present invention has been disclosed in the form of preferred embodiments and variations thereon, it will be understood that numerous additional modifications and variations could be made thereto without departing from the scope of the invention. In particular, the tower may have a cast shape, for instance made of concrete, rather than be made up of construction elements such as shells. Also, the foundation of the basis can be adapted in a similar manner as described with reference to the tower. Thereby, a particular focus can be directed towards reinforcement elements in the foundation which may be added or reduced in order to weaken the foundation locally.

For the sake of clarity, it is to be understood that the use of "a" or "an" throughout this application does not exclude a plurality, and "comprising" does not exclude other steps or elements.

## Claims

1. Method of optimising a construction of a basis (1a, 1b) of a wind turbine (8a, 8b) comprising at least a tower (6a, 6b) and a foundation (4) on which the tower (6a, 6b) rests, both the tower (6a, 6b) and the foundation (4) comprising a carrying structure (2a, 2b) each, with the following steps:
- analysing (A) a local load environment situation (LES) of a construction location where the wind turbine (8a, 8b) is to be built and deriving from that analysis local load-relevant environment data (ED),
- creating (B) construction instructions (CI) for structuring the basis (1a, 1b), whereby the construction instructions (CI) are based on the local load-relevant environment data (ED) and on a set of predefined rules (R) for processing the local load-relevant environment data (ED), such that in a first selected region (15a, 15b) of the basis (1a, 1b) along a circumference of the tower (6a, 6b) and/or in a first selected region of the foundation (4) the carrying structure (2a, 2b) of the basis (1a, 1b) is locally weakened in at least one selected horizontal cross-section with respect to possible maximum fatigue loads in comparison with a second region (13a, 13b) of the basis (1a, 1b) in the selected cross-section, whereby the predefined rules (R) are such that the tower (6a, 6b) is locally weakened by locally changing its material quality and/or a material quality of a constructional element (19, 21, 23);
- outputting (C) the construction instructions (CI) for further processing.

2. Method according to claim 1, whereby the wind turbine (8a, 8b) is built (D) according to the construction instructions (CI).

3. Method according to any of the preceding claims, whereby the predefined rules (R) are such that the basis (1a, 1b) is weakened in at least two first regions (15a, 15b) which are positioned opposite of one another along the circumference of the tower (6a, 6b) in the selected horizontal cross-section.

4. Method according to any of the preceding claims, whereby the local load-relevant environment data (ED) considered are selected from at least one of the following:
- wind data (WD) about prevailing winds in the construction location,
- surface data about a ground surface in the construction location,
- wave behaviour data about expected directions and/or strengths of waves in an offshore application in the construction location,
and whereby the predefined rules (R) are such that the first region (15a, 15b) is chosen in dependence of the local load-relevant environment data (ED).

5. Method according to any of the preceding claims, whereby the predefined rules (R) are such that the tower (6a, 6b) is locally weakened in a first region (15a, 15b).

6. Method according to claim 5, whereby the predefined rules (R) are such that the tower (6a, 6b) comprises a set of a group of construction elements (19, 21, 23), whereby at least a first group of construction elements (21) is weakened than a second group of construction elements (19) of the set.

7. Method according to claim 6, whereby the first group of construction elements (21) has a different size and/or shape and/or amount of construction elements (21) than the second group of construction elements (19).

8. Method according to any of claims 5 to 7, whereby the predefined rules (R) are such that the tower (6a, 6b) is locally weakened by locally decreasing its thickness and/or a thickness of a construction element (21) of it.

9. Method according to any of claims 5 to 8, whereby the predefined rules (R) are such that the tower (6a, 6b) is locally weakened by locally changing its directional stiffness.

10. Method according to any of the preceding claims, whereby the predefined rules (R) are such that diameters (di, d₂) along a circumference of the tower (6a, 6b) in at least one of its horizontal cross sections differ.

11. Basis (1a, 1b) of a wind turbine (8a, 8b) comprising at least a tower (6a, 6b) and a foundation (4) on which the tower (6a, 6b) rests, both the tower (6a, 6b) and the foundation (4) comprising a carrying structure (2a, 2b) each, whereby in a first selected region (15a, 15b) of the basis (1a, 1b) along a circumference of the tower (6a, 6b) and/or in a first selected region of the foundation (4) the carrying structure (2a, 2b) of the basis (1a, 1b) is locally weaker in at least one selected horizontal cross-section with respect to possible maximum fatigue loads in comparison with a second region (13a, 13b) of the basis (1a, 1b) in the selected cross-section, and wherein the construction of the basis (1a, 1b) is optimised using the method according to any of claims 1 to 10.

12. System (35) for optimising a construction of a basis (1a, 1b) of a wind turbine (8a, 8b) comprising at least a tower (6a, 6b) and a foundation (4) on which the tower (6a, 6b) rests, both the tower (6a, 6b) and the foundation (4) comprising a carrying structure (2a, 2b) each, the system comprising at least:
- an input interface (27) for data (DLE) representing a local load environment situation (LES) of a construction location where the wind turbine (8a, 8b) is to be built,
- an analysation unit (29) realised to analyse (A) the local load environment situation (LES) and to derive from that analysis local load-relevant environment data (ED),
- a rule database (DB) supplying in operation a set of predefined rules (R) for processing the local load-relevant environment data (ED), whereby the predefined rules (R) are such that the tower (6a, 6b) is locally weakened by locally changing its material quality and/or a material quality of a constructional element (19, 21, 23);
- an instruction unit (31) which in operation creates construction instructions (CI) for structuring the basis (1a, 1b), the construction instructions (CI) being based on the local load-relevant environment data (ED) and on the set of predefined rules (R), such that in a first selected region (15a, 15b) of the basis (1a, 1b) along a circumference of the tower (6a, 6b) and/or in a first selected region of the foundation (4) the carrying structure (2a, 2b) of the basis (1a, 1b) is locally weakened in at least one selected horizontal cross-section with respect to possible maximum fatigue loads in comparison with a second region (13a, 13b) of the basis (1a, 1b) in the selected cross-section,
- an output unit (33) for outputting (C) the construction instructions (CI) for further processing.

13. A computer program product directly loadable into the memory of a programmable device comprising software code portions for performing the steps of a method according to any of claims 1 to 10.

## Patentansprüche

1. Verfahren zum Optimieren einer Konstruktion einer Basis (1a, 1b) einer Windenergieanlage (8a, 8b), die wenigstens einen Turm (6a, 6b) und ein Fundament (4), auf welchem der Turm (6a, 6b) ruht, umfasst, wobei sowohl der Turm (6a, 6b) als auch das Fundament (4) jeweils eine Tragstruktur (2a, 2b) umfassen, mit den folgenden Schritten:
- Analysieren (A) einer lokalen Lastumgebungssituation (LES) eines Errichtungsortes, an dem die Windenergieanlage (8a, 8b) gebaut werden soll, und Ableiten lokaler lastrelevanter Umgebungsdaten (ED) aus dieser Analyse,
- Erzeugen (B) von Bauanweisungen (CI) zum Strukturieren der Basis (1a, 1b), wobei die Bauanweisungen (CI) auf den lokalen lastrelevanten Umgebungsdaten (ED) und auf einem Satz von vordefinierten Regeln (R) zum Verarbeiten der lokalen lastrelevanten Umgebungsdaten (ED) basieren, derart, dass in einem ersten ausgewählten Bereich (15a, 15b) der Basis (1a, 1b) entlang eines Umfangs des Turms (6a, 6b) und/oder in einem ersten ausgewählten Bereich des Fundaments (4) die Tragstruktur (2a, 2b) der Basis (1a, 1b) in wenigstens einem ausgewählten horizontalen Querschnitt in Bezug auf mögliche maximale Ermüdungslasten im Vergleich zu einem zweiten Bereich (13a, 13b) der Basis (1a, 1b) in dem ausgewählten Querschnitt lokal geschwächt wird, wobei die vordefinierten Regeln (R) so beschaffen sind, dass der Turm (6a, 6b) lokal geschwächt wird, indem seine Materialqualität und/oder eine Materialqualität eines Bauelements (19, 21, 23) lokal geändert wird;
- Ausgeben (C) der Bauanweisungen (CI) zur weiteren Verarbeitung.

2. Verfahren nach Anspruch 1, wobei die Windenergieanlage (8a, 8b) gemäß den Bauanweisungen (CI) gebaut wird (D).

3. Verfahren nach einem der vorhergehenden Ansprüche, wobei die vordefinierten Regeln (R) so beschaffen sind, dass die Basis (1a, 1b) in wenigstens zwei ersten Bereichen (15a, 15b) geschwächt wird, welche einander gegenüberliegend entlang des Umfangs des Turms (6a, 6b) in dem ausgewählten horizontalen Querschnitt positioniert sind.

4. Verfahren nach einem der vorhergehenden Ansprüche, wobei die berücksichtigten lokalen lastrelevanten Umgebungsdaten (ED) aus wenigstens einem von Folgendem ausgewählt werden:
- Winddaten (WD) über vorherrschende Winde an dem Errichtungsort;
- Oberflächendaten über eine Geländeoberfläche an dem Errichtungsort;
- Wellenverhaltensdaten über erwartete Richtungen und/oder Stärken von Wellen bei einer Offshore-Anwendung am Errichtungsort,
und wobei die vordefinierten Regeln (R) so beschaffen sind, dass der erste Bereich (15a, 15b) in Abhängigkeit von den lokalen lastrelevanten Umgebungsdaten (ED) gewählt wird.

5. Verfahren nach einem der vorhergehenden Ansprüche, wobei die vordefinierten Regeln (R) so beschaffen sind, dass der Turm (6a, 6b) in einem ersten Bereich (15a, 15b) lokal geschwächt wird.

6. Verfahren nach Anspruch 5, wobei die vordefinierten Regeln (R) so beschaffen sind, dass der Turm (6a, 6b) einen Satz von Gruppen von Bauelementen (19, 21, 23) umfasst, wobei wenigstens eine erste Gruppe von Bauelementen (21) schwächer als eine zweite Gruppe von Bauelementen (19) des Satzes ist.

7. Verfahren nach Anspruch 6, wobei die erste Gruppe von Bauelementen (21) eine andere Größe und/oder Form und/oder Anzahl von Bauelementen (21) als die zweite Gruppe von Bauelementen (19) aufweist.

8. Verfahren nach einem der Ansprüche 5 bis 7, wobei die vordefinierten Regeln (R) so beschaffen sind, dass der Turm (6a, 6b) lokal geschwächt wird, indem seine Dicke und/oder eine Dicke eines Bauelements (21) desselben lokal verringert wird.

9. Verfahren nach einem der Ansprüche 5 bis 8, wobei die vordefinierten Regeln (R) so beschaffen sind, dass der Turm (6a, 6b) lokal geschwächt wird, indem seine direktionale Steifigkeit lokal geändert wird.

10. Verfahren nach einem der vorhergehenden Ansprüche, wobei die vordefinierten Regeln (R) so beschaffen sind, dass sich Durchmesser (d₁, d₂) entlang eines Umfangs des Turms (6a, 6b) in wenigstens einem seiner horizontalen Querschnitte unterscheiden.

11. Basis (1a, 1b) einer Windenergieanlage (8a, 8b), welche wenigstens einen Turm (6a, 6b) und ein Fundament (4), auf welchem der Turm (6a, 6b) ruht, umfasst, wobei sowohl der Turm (6a, 6b) als auch das Fundament (4) jeweils eine Tragstruktur (2a, 2b) umfassen, wobei in einem ersten ausgewählten Bereich (15a, 15b) der Basis (1a, 1b) entlang eines Umfangs des Turms (6a, 6b) und/oder in einem ersten ausgewählten Bereich des Fundaments (4) die Tragstruktur (2a, 2b) der Basis (1a, 1b) in wenigstens einem ausgewählten horizontalen Querschnitt in Bezug auf mögliche maximale Ermüdungslasten im Vergleich zu einem zweiten Bereich (13a, 13b) der Basis (1a, 1b) in dem ausgewählten Querschnitt lokal schwächer ist, und wobei die Konstruktion der Basis (1a, 1b) unter Anwendung des Verfahrens nach einem der Ansprüche 1 bis 10 optimiert ist.

12. System (35) zum Optimieren einer Konstruktion einer Basis (1a, 1b) einer Windenergieanlage (8a, 8b), welche wenigstens einen Turm (6a, 6b) und ein Fundament (4), auf welchem der Turm (6a, 6b) ruht, umfasst, wobei sowohl der Turm (6a, 6b) als auch das Fundament (4) jeweils eine Tragstruktur (2a, 2b) umfassen, wobei das System wenigstens umfasst:
- eine Eingabeschnittstelle (27) für Daten (DLE), die eine lokale Lastumgebungssituation (LES) eines Errichtungsortes repräsentieren, an dem die Windenergieanlage (8a, 8b) gebaut werden soll,
- eine Analyseeinheit (29), die dafür ausgelegt ist, die lokale Lastumgebungssituation (LES) zu analysieren (A) und aus dieser Analyse lokale lastrelevante Umgebungsdaten (ED) abzuleiten,
- eine Regeldatenbank (DB), die im Betrieb einen Satz von vordefinierten Regeln (R) zum Verarbeiten der lokalen lastrelevanten Umgebungsdaten (ED) liefert, wobei die vordefinierten Regeln (R) so beschaffen sind, dass der Turm (6a, 6b) lokal geschwächt wird, indem seine Materialqualität und/oder eine Materialqualität eines Bauelements (19, 21, 23) lokal geändert wird;
- eine Anweisungseinheit (31), welche im Betrieb Bauanweisungen (CI) zum Strukturieren der Basis (1a, 1b) erzeugt, wobei die Bauanweisungen (CI) auf den lokalen lastrelevanten Umgebungsdaten (ED) und auf dem Satz von vordefinierten Regeln (R) basieren, derart, dass in einem ersten ausgewählten Bereich (15a, 15b) der Basis (1a, 1b) entlang eines Umfangs des Turms (6a, 6b) und/oder in einem ersten ausgewählten Bereich des Fundaments (4) die Tragstruktur (2a, 2b) der Basis (1a, 1b) in wenigstens einem ausgewählten horizontalen Querschnitt in Bezug auf mögliche maximale Ermüdungslasten im Vergleich zu einem zweiten Bereich (13a, 13b) der Basis (1a, 1b) in dem ausgewählten Querschnitt lokal geschwächt wird,
- eine Ausgabeeinheit (33) zum Ausgeben (C) der Bauanweisungen CI) zur weiteren Verarbeitung.

13. Computerprogrammprodukt, welches direkt in den Speicher einer programmierbaren Vorrichtung geladen werden kann und Softwarecodeabschnitte zum Ausführen der Schritte eines Verfahrens nach einem der Ansprüche 1 bis 10 umfasst.

## Revendications

1. Procédé d'optimisation d'une construction d'une base (1a, 1b) d'une éolienne (8a, 8b) comprenant au moins une tour (6a, 6b) et une fondation (4) sur laquelle repose la tour (6a, 6b), la tour (6a, 6b) et la fondation (4) comprenant toutes les deux une structure de support (2a, 2b), comprenant les étapes suivantes :
- analyser (A) une situation d'environnement de charge (LES) locale d'un lieu de construction où l'éolienne (8a, 8b) doit être construite et dériver, à partir de cette analyse, des données d'environnement (ED) locales relatives à la charge,
- créer (B) des instructions de construction (CI) pour structurer la base (1a, 1b), dans lequel les instructions de construction (CI) sont basées sur les données d'environnement (ED) locales relatives à la charge et sur un ensemble de règles (R) prédéfinies pour traiter les données d'environnement (ED) locales relatives à la charge, de sorte que dans une première région sélectionnée (15a, 15b) de la base (1a, 1b) le long d'une circonférence de la tour (6a, 6b) et/ou dans une première région sélectionnée de la fondation (4), la structure de support (2a, 2b) de la base (1a, 1b) est affaiblie localement dans au moins une section transversale horizontale sélectionnée par rapport à d'éventuelles charges de fatigue maximales en comparaison d'une seconde région (13a, 13b) de la base (1a, 1b) dans la section transversale sélectionnée, dans lequel les règles (R) prédéfinies sont telles que la tour (6a, 6b) est affaiblie localement en modifiant localement sa qualité matérielle et/ou une qualité matérielle d'un élément de construction (19, 21, 23) ;
- délivrer (C) les instructions de construction (CI) pour un traitement supplémentaire.

2. Procédé selon la revendication 1, dans lequel l'éolienne (8a, 8b) est construite (D) selon les instructions de construction (CI).

3. Procédé selon l'une quelconque des revendications précédentes, dans lequel les règles (R) prédéfinies sont telles que la base (1a, 1b) est affaiblie dans au moins deux premières régions (15a, 15b) qui sont positionnées en face l'une de l'autre le long de la circonférence de la tour (6a, 6b) dans la section transversale horizontale sélectionnée.

4. Procédé selon l'une quelconque des revendications précédentes, dans lequel les données d'environnement (ED) locales relatives à la charge prises en compte sont choisies parmi au moins l'une des catégories suivantes :
- des données de vent (WD) sur les vents dominants dans le lieu de la construction,
- des données de surface sur une surface du sol dans le lieu de la construction,
- des données de comportement des vagues sur les directions et/ou les forces des vagues attendues dans une application au large des côtes dans le lieu de la construction,
et dans lequel les règles (R) prédéfinies sont telles que la première région (15a, 15b) est choisie en fonction des données d'environnement (ED) locales relatives à la charge.

5. Procédé selon l'une quelconque des revendications précédentes, dans lequel les règles (R) prédéfinies sont telles que la tour (6a, 6b) est affaiblie localement dans une première région (15a, 15b).

6. Procédé selon la revendication 5, dans lequel les règles (R) prédéfinies sont telles que la tour (6a, 6b) comprend un ensemble de groupes d'éléments de construction (19, 21, 23), dans lequel au moins un premier groupe d'éléments de construction (21) est plus faible qu'un second groupe d'éléments de construction (19) de l'ensemble.

7. Procédé selon la revendication 6, dans lequel le premier groupe d'éléments de construction (21) a une taille et/ou forme et/ou quantité d'éléments de construction (21) différente du second groupe d'éléments de construction (19).

8. Procédé selon l'une quelconque des revendications 5 à 7, dans lequel les règles (R) prédéfinies sont telles que la tour (6a, 6b) est affaiblie localement en diminuant localement son épaisseur et/ou une épaisseur d'un élément de construction (21) de celle-ci.

9. Procédé selon l'une quelconque des revendications 5 à 8, dans lequel les règles (R) prédéfinies sont telles que la tour (6a, 6b) est affaiblie localement en modifiant localement sa rigidité directionnelle.

10. Procédé selon l'une quelconque des revendications précédentes, dans lequel les règles (R) prédéfinies sont telles que des diamètres (d1, d2) le long d'une circonférence de la tour (6a, 6b) dans au moins l'une de ses sections transversales horizontales diffèrent.

11. Base (1a, 1b) d'une éolienne (8a, 8b) comprenant au moins une tour (6a, 6b) et une fondation (4) sur laquelle repose la tour (6a, 6b), la tour (6a, 6b) et la fondation (4) comprenant toutes les deux une structure de support (2a, 2b), dans lequelle dans une première région sélectionnée (15a, 15b) de la base (1a, 1b) le long d'une circonférence de la tour (6a, 6b), et/ou dans une première région sélectionnée de la fondation (4), la structure de support (2a, 2b) de la base (1a, 1b) est localement plus faible dans au moins une section transversale horizontale sélectionnée par rapport à d'éventuelles charges de fatigue maximales en comparaison d'une seconde région (13a, 13b) de la base (1a, 1b) dans la section transversale sélectionnée, et dans laquelle la construction de la base (1a, 1b) est optimisée en utilisant le procédé selon l'une quelconque des revendications 1 à 10.

12. Système (35) pour optimiser une construction d'une base (1a, 1b) d'une éolienne (8a, 8b) comprenant au moins une tour (6a, 6b) et une fondation (4) sur laquelle la tour (6a, 6b) repose, à la fois la tour (6a, 6b) et la fondation (4) comprenant une structure de support (2a, 2b) chacune, le système comprenant au moins :
- une interface d'entrée (27) pour des données (DLE) représentant une situation d'environnement de charge (LES) locale d'un lieu de construction où l'éolienne (8a, 8b) doit être construite,
- une unité d'analyse (29) conçue pour analyser (A) la situation d'environnement de charge (LES) locale et tirer à partir de cette analyse des données d'environnement (ED) locales relatives à la charge,
- une base de données (DB) de règles fournissant, en fonctionnement, un ensemble de règles (R) prédéfinies pour traiter les données d'environnement (ED) locales relatives à la charge, de sorte que les règles (R) prédéfinies sont telles que la tour (6a, 6b) est affaiblie localement en modifiant localement sa qualité matérielle et/ou une qualité matérielle d'un élément de construction (19, 21, 23) ;
- une unité d'instruction (31) qui, en utilisation, crée des instructions de construction (CI) pour structurer la base (1a, 1b), les instructions de construction (CI) étant basées sur les données d'environnement (ED) locales relatives à la charge et sur l'ensemble de règles (R) prédéfinies, de telle sorte que dans une première région sélectionnée (15a, 15b) de la base (1a, 1b) le long d'une circonférence de la tour (6a, 6b) et/ou dans une première région sélectionnée de la fondation (4), la structure de support (2a, 2b) de la base (1a, 1b) est affaiblie localement dans au moins une section transversale horizontale sélectionnée par rapport à d'éventuelles charges de fatigue maximales en comparaison d'une seconde région (13a, 13b) de la base (1a, 1b) dans la section transversale sélectionnée,
- une unité de sortie (33) pour délivrer (C) les instructions de construction (CI) pour un traitement supplémentaire.

13. Produit de programme d'ordinateur pouvant être chargé directement dans la mémoire d'un dispositif programmable comprenant des parties de code logiciel pour exécuter les étapes d'un procédé selon l'une quelconque des revendications 1 à 10.
